# EUROPÄISCHE PATENTSCHRIFT

(11) **EP 1 524 421 B1**
(45) Veröffentlichungstag und Bekanntmachung des Hinweises auf die Patenterteilung: **22.03.2006**
(21) Anmeldenummer: 04023468.4
(22) Anmeldetag: 01.10.2004
(51) Int. Cl.: F02B 37/12, G01N 25/72, G01J 5/48

(54) **Verfahren und Vorrichtung zum Schutz eines Abgasturboladers**
Method and device for protecting a turbo-supercharger
Procédé et dispositif pour protéger un turbocompresseur

(30) Priorität: 17.10.2003 DE 10349133
(43) Veröffentlichungstag der Anmeldung: 20.04.2005
(73) Patentinhaber: IAV GMBH INGENIEURGESELLSCHAFT AUTO UND VERKEHR, 10587 Berlin (DE)
(72) Erfinder: Diezemann, Matthias, 10555 Berlin (DE)
(74) Vertreter: Bürger, Peter

(56) Entgegenhaltungen:
- DE-A1- 3 407 911
- DE-A1- 10 335 371
- DE-A1- 19 720 461
- DING K: "TEST OF JET ENGINE TURBINE BLADES BY THERMOGRAPHY" OPTICAL ENGINEERING, SOC. OF PHOTO-OPTICAL INSTRUMENTATION ENGINEERS. BELLINGHAM, US, Bd. 24, Nr. 6, November 1985 (1985-11), Seiten 1055-1059, XP002045762 ISSN: 0091-3286

## Beschreibung

Die Erfindung betrifft ein Verfahren zur Ermittlung eines Kennlinienfeldes zur Steuerung von aufgeladenen Brennkraftmaschinen mit den im Oberbegriff des Patenanspruches 1 genannten Merkmalen sowie eine dazugehörige Vorrichtung mit den im Oberbegriff des Patentanspruches 7 genannten Merkmalen.

Es ist allgemein bekannt, den Arbeitsmodus einer Verbrennungskraftmaschine durch ein Motorsteuergerät anhand der aktuellen Motordaten wie Fahrerwunschmoment, Motordrehzahl, Motortemperatur, Abgastemperatur, Verhältnis des dem Motor zugeführten Luft/Kraftstoff-Gemisches (λ-Wert) usw. zu regeln. Dabei muss beachtet werden, dass beim Realisieren eines Fahrerwunschmomentes durch Einstellen des Arbeitsmodus die Abgastemperatur der Verbrennungsgase nicht soweit erhöht wird, dass sie die zulässige Grenztemperatur für den dem Motor nachgeschalteten Abgasturbolader überschreitet. Ein Überschreiten der zulässigen Grenztemperatur würde zu einer schleichenden Schädigung der Schaufelräder des Abgasturboladers führen.

Zur Verhinderung der abgasseitigen Bauteilbelastung von Brennkraftmaschinen wird gemäß der DE 198 47 477 A1 über einen Abgastemperatursensor die Temperatur der dem Turbolader zugeführten Abgase gemessen. Bei Überschreitung einer zulässigen Grenztemperatur wird durch Einstellung des der Verbrennungskraftmaschine zugeführten Kraftstoff-Luft-Verhältnisses die Abgastemperatur verringert.

Aus der DE 44 39 573 A1 und der DE 26 47 836 C3 ist es bekannt, zum Schutz der Abgasturbine vor zu hohen Temperaturen dem Abgasstrom vor dessen Eintritt in die Turbine regelbar kalte Luft zuzuführen.

Entsprechend der DE 100 04 875 A1 wird zum Schutz des Turboladers vor zu hohen Abgastemperaturen gleichzeitig bei zu großer Zündwinkel-Spätverstellung das Kraftstoff-Luft-Gemisch angereichert, so dass dadurch eine Kühlung des Laders auftritt.

Nachteilig des beschriebenen Standes der Technik ist, dass mit den vorhandenen Temperaturmesseinrichtungen nur eine ungenaue Erfassung der tatsächlich vorliegenden Temperaturen der Schaufelräder der Turbine des Turboladers möglich ist. Thermoelemente erfassen nur die Gastemperatur vor bzw. nach der Turbine, nicht aber die Bauteiltemperatur auf den Schaufeln des Turbinenrades. Außerdem können die Thermoelemente aufgrund ihrer Trägheit kurzzeitige transiente Temperatureinträge in die Laderschaufeln nicht erfassen. Durch die verzögerte und ungenaue Ermittlung der jeweilig vorliegenden Temperatur an den Laderschaufeln können die aus dem Motorbetrieb hervorgerufenen Ursachen für eine Temperaturänderung nicht erkannt werden bzw. die Regelung des Arbeitsmodus der Verbrennungsmaschine erfolgt zeitlich verzögert, so dass die maximal zulässige Temperatur des Turboladers überschritten wird. Eine genaue Abstimmung des Motorbetriebes an die maximal zulässige Laderschaufeltemperatur ist nicht möglich. Durch die eingeleiteten Maßnahmen zur Reduzierung der Abgastemperaturen der Verbrennungskraftmaschine wird insgesamt Kraftstoff vergeudet. Ein geringer Abstand zum Grenzbereich der Temperaturen an den Laderschaufeln des Abgasturboladers kann deutlich mehr Kraftstoff sparen.

Zur besseren Ermittlung der jeweiligen Temperaturen an den Turbinenschaufeln ist aus der DE 37 40 693 C2 ein optisches Strahlungssensorgerät zur Messung von hohen Temperaturen in Gasturbinen vorbekannt. Das Pyrometer zur Temperaturmessung weist einen Wärmestrahlung empfangenden Pyrometerkopf auf, der auf die Schaufeln der Gasturbine gerichtet ist. Eine Linse des Pyrometers fokussiert die von den Schaufeln ausgehende Strahlung und leitet sie über ein optisches Kabel einem Detektor zu, der mit einer Prozesseinheit verbunden ist. Dort wird die Schaufelradtemperatur ermittelt, anhand der die Turbinenfunktion über eine Turbinensteuereinheit geregelt wird.

Durch die Anmelderin wurde entsprechend der DE 103 18 463.5 vorgeschlagen, mittels eines Pyrometers die abgasseitigen Temperaturen von Verbrennungskraftmaschinen zu erfassen. Aus der mittels Pyrometer ermittelten Temperatur kann einerseits ein Kennlinienfeld zum Einstellen maximal zulässiger Temperaturbelastungen an temperaturgefährdeten Bauteilen des Abgasstranges der Verbrennungskraftmaschine erstellt und andererseits der Arbeitsmodus der Verbrennungskraftmaschine mittels eines Motorsteuergerätes geregelt werden.

Nachteilig bei dem Einsatz eines Pyrometers zur Temperaturmessung ist, dass die Temperatur nur an einem bestimmten Messfleck an dem Bauteil ermittelt werden kann, auf den das Pyrometer gerichtet ist. Eine flächenmäßige Erfassung der Temperatur ist damit nicht möglich. Bei Laderschaufeln von Abgasturbinen ist aber die Kenntnis der Temperatur auf der Oberfläche entscheidend, da die Temperaturverteilung auf der Oberfläche der Schaufeln ungleichmäßig ist. Aufgrund der Ungleichverteilung der Temperatur auf der Oberfläche der Schaufeln ist eine optimale Einstellung der zulässigen Temperatur der Motorabgase nicht möglich.

Weiterhin wurde durch die Anmelderin entsprechend der DE 103 32 248.5 eine Kalibrierung einer Thermografiekamera zur Temperaturmessung an sich drehenden Bauteilen vorgeschlagen. Eine Ermittlung eines Kennlinienfeldes zur Steuerung von aufgeladenen Brennkraftmaschinen erfolgt damit nicht.

Der Erfindung liegt die Aufgabe zugrunde, ein Verfahren und die dazugehörige Vorrichtung zur Ermittlung eines Kennlinienfeldes zur Steuerung von aufgeladenen Brennkraftmaschinen insbesondere zum thermischen Schutz eines Abgasturboladers zu schaffen, mittels dem durch das Motorsteuergerät die Motorparameter schneller und genauer derart beeinflussbar sind, dass eine maximal zulässige Temperaturbelastung der mit Motorabgasen betriebenen Abgasturbine eines Abgasturboladers einstellbar ist, um somit den Kraftstoffverbrauch der Verbrennungskraftmaschine zu reduzieren.

Diese Aufgabe wird entsprechend dem gattungsgemäßen Verfahren erfindungsgemäß durch die kennzeichnenden Merkmale des Patentanspruches 1 und entsprechend der gattungsgemäßen Vorrichtung erfindungsgemäß durch die kennzeichnenden Merkmale des Patentanspruches 7 gelöst.

Erfindungsgemäß wird im dynamischen und statischen Motorbetrieb und bei verschiedenen unterschiedlichen Betriebszuständen mittels einer Thermografiekamera eine Bildersequenz der Messoberfläche der Schaufelräder eines Abgasturboladers aufgenommen und in einer Auswertungseinheit für den jeweiligen Betriebszustand ein über die Oberfläche der Schaufelräder betrachteter Temperaturverlauf ermittelt und deren Daten gespeichert. Parallel zur Bildersequenz werden die am Motorsteuergerät anliegenden und von ihm ausgegebenen Betriebsparameter der Verbrennungskraftmaschine erfasst und deren Daten gespeichert. Durch zeitsynchrone Triggerung des ermittelten Temperaturverlaufs mit den einzelnen Daten der Betriebsparameter erfolgt in einer Datenauswertungseinrichtung eine Zuordnung der für die Temperaturänderung der Schaufelräder des Abgasturboladers maßgeblichen Betriebsparameter. Durch Variieren eines oder mehrerer für die Temperaturänderung der Schaufelräder des Abgasturboladers maßgeblichen Betriebsparameters/Betriebsparameter wird die maximal zulässige Temperatur der Schaufelräder eingeregelt und die dafür optimalen Betriebsparameter in einem Kennfeld in einem Datenspeicher abgelegt.

Durch den Einsatz einer Thermografiekamera zur Ermittlung eines Kennlinienfeldes zur Steuerung von aufgeladenen Brennkraftmaschinen ist es möglich, auftretende Temperaturunterschiede an der Oberfläche der Schaufelräder zu ermitteln. Dadurch kann die maximal auftretende Temperaturbelastung an dem Schaufelrad bei einem eingestellten Betriebszustand der Verbrennungskraftmaschine ermittelt werden. Durch Variieren der Betriebsparameter der Verbrennungskraftmaschine mittels des Motorsteuergeräts werden für verschiedene unterschiedliche Betriebszustände jeweils die optimalen Betriebsbedingungen eingestellt, bei denen die Abgastemperatur nahe dem Grenzbereich der thermischen Belastbarkeit der Turbine des Abgasturboladers liegt. Die zu den jeweiligen ermittelten Betriebsbedingungen dazugehörigen Betriesparameter werden als Kennlinienfeld im Motorsteuergerät abgelegt. Anhand des erstellten Kennlinienfeldes erfolgt im normalen Fahrbetrieb eine Motorsteuerung derart, dass bei einem thermischen Schutz eines Abgasturboladers vor Überhitzung die Betriebsparameter der Verbrennungskraftmaschine so eingestellt werden, dass der Kraftstoffverbrauch reduziert wird.

Weitere vorteilhafte Ausgestaltungen sind in den Unteransprüchen beschrieben, sie werden in der Beschreibung zusammen mit ihren Wirkungen erläutert.

Anhand einer Zeichnung wird nachfolgend ein Ausführungsbeispiel der Erfindung beschrieben. Die dazugehörige Zeichnung zeigt die schematische Darstellung der erfindungsgemäßen Lösung zur Ermittlung eines Kennlinienfeldes zur Steuerung von aufgeladenen Brennkraftmaschinen.

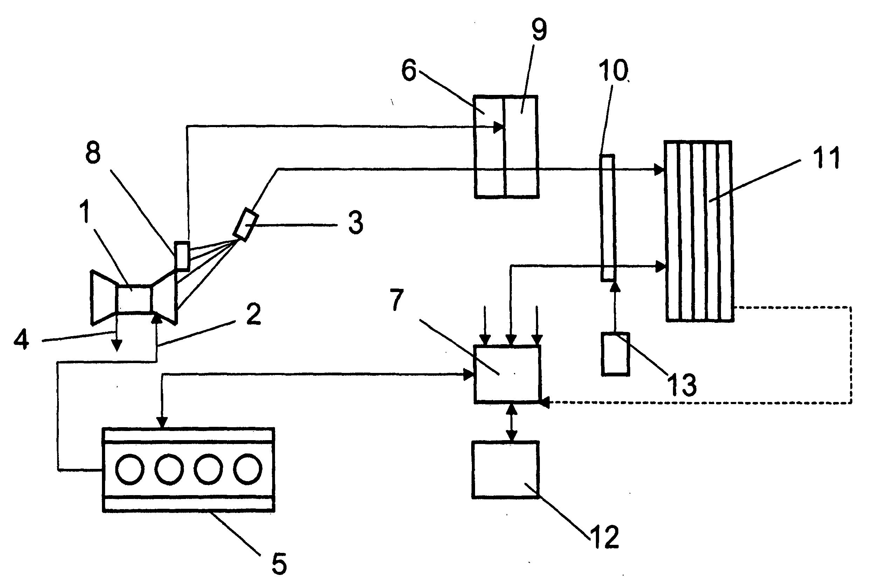

In der Figur ist mit 5 eine Verbrennungskraftmaschine dargestellt, der abgasseitig ein Abgasturbolader 1 nachgeschaltet ist, dessen Turbine von einem Abgasstrom 2 der Verbrennungskraftmaschine 5 angetrieben wird. Die mittels des Abgasturboladers 1 aufgeladene Ladeluft 4 wird in bekannter Art der Verbrennungskraftmaschine 5 zugeführt. Das Erfassen und die Regelung des Arbeitsmodus der Verbrennungskraftmaschine 5 erfolgt in an sich bekannter Weise mittels eines Motorsteuergerätes 7. Dabei werden durch das Motorsteuergerät 7 die Betriebsparameter wie λ-Wert, Motordrehzahl, Motortemperatur, Drosselklappenstellung, Zündwinkelverstellung und dergleichen erfasst und eingestellt.

Außerhalb des Gehäuses des Abgasturboladers 1 ist eine Thermografiekamera 3 zur Erfassung einer Bildersequenz der Messoberfläche der Schaufelräder des Abgasturboladers 1 angeordnet. Mit der Thermografiekamera 3 wird der Temperaturverlauf auf der Oberfläche der Schaufeln des turbinenseitigen Abgasturboladers 1 erfasst, die aufgrund des heißen Abgasstromes 2 der größten thermischen Belastung ausgesetzt sind. Im Gehäuse des Abgasturboladers 1 befindet sich ein nicht dargestelltes optisches Fenster, das derart angeordnet ist, dass die turbinenseitigen Schaufeln des Abgasturboladers 1 sowie eine innerhalb des Gehäuses angeordnete Kalibrierfläche 8 sich im Sichtbereich der Thermografiekamera 3 befinden.

Die Thermografiekamera 3 ist über eine Datenleitung datentechnisch mit einer Auswertungseinheit 6, einer Kalibrierung 9 einer weiteren Auswertungseinheit 10, einem Datenspeicher 11 sowie mit einem Motorsteuergerät 7, einer Getriebesteuerung 12 und einer zusätzlichen Betriebsparametereingabe 13 verbunden.

Durch die Thermografiekamera 3 erfolgt bei einem entsprechenden dynamischen oder statischen Motorbetrieb und bei jeweilig eingestellten unterschiedlichen Betriebszuständen eine Aufnahme der Bildersequenz der Messoberfläche der Schaufelräder des Abgasturboladers 1. Die Aufnahme der Bildersequenz zur Ermittlung des Kennlinienfeldes zur Steuerung von aufgeladenen Verbrennkraftmaschinen 5 erfolgt vorzugsweise auf einem Motorprüfstand. Die ermittelten Daten der Bildersequenz werden über eine Datenleitung der Auswertungseinheit 6 zugeführt, in der ein über die Oberfläche der Schaufeln betrachteter Temperaturverlauf für den jeweiligen im Fahrbetrieb simulierten Betriebszustand erstellt wird. Die entsprechenden Daten des Temperaturverlaufs werden in der Auswertungseinheit 6 gespeichert.

Parallel zur Aufnahme der Bildersequenz durch die Thermografiekamera 3 werden über das Motorsteuergerät 7 die jeweiligen anliegenden Betriebsparameter der Verbrennungskraftmaschine 5 und der Getriebesteuerung 12 sowie zusätzliche Betriebsparameter 13, wie Fahrerschutzfunktionen, erfasst und deren Daten in der Auswertungseinheit 10 gespeichert.

In der Auswertungseinheit 10 erfolgt eine zeitsynchrone Triggerung der mittels der Auswertungseinheit 6 erstellten Daten zum Temperaturverlauf mit den einzelnen Daten der dazugehörigen Betriebsparameter, so dass die Temperatur der Schaufelräder den jeweiligen Betriebsbedingungen zugeordnet werden kann. Durch Variieren eines oder mehrerer für die Temperaturänderung der Schaufelräder des Abgasturboladers 1 maßgeblichen Betriebsparameters/Betriebsparameter wird die maximal zulässige Temperatur der Schaufelräder eingeregelt und die dafür optimalen Betriebsparameter in einem Kennfeld eines Datenspeichers 11 abgelegt. Dabei wird durch Variieren der Zündwinkelkennfelder und/oder der Bauteilschutzanfettungsfunktionen und/oder der Drosselklappenansteuerungsfunktionen und/oder ABS-, ASR-, ESP- oder ähnlicher Fahrschutzfunktionen und/oder Schalteingriffe durch die Getriebesteuerung von Handschalt-, Automatik- oder Direktschaltgetrieben die Temperaturbelastung der Schaufelräder des Abgasturboladers 1 bei Einhaltung eines vorgegebenen Grenzwertes minimiert.

Das für den jeweiligen Fahrzeugtyp so ermittelte und im Datenspeicher 11 gespeicherte Kennlinienfeld wird in die Motorsteuergeräte der entsprechenden Fahrzeuge eingespeichert, so dass anhand dieser Kennlinienfelder im normalen Fahrbetrieb eine Regelung des Arbeitsmodus der Verbrennungskraftmaschine, insbesondere zum thermischen Schutz eines Abgasturboladers, erfolgen kann.

Damit die durch die Thermografiekamera 3 ermittelten Werte nicht verfälscht werden, erfolgt vor jeder Aufnahme der Bildersequenz zur Ermittlung des Kennlinienfeldes eine Kalibrierung der aufnehmenden Thermografiekamera 3. Die Kalibrierung erfolgt anhand der Kalibrierfläche 8 entsprechend dem in der DE 103 32 248.5 vorgeschlagenen Verfahren. Außerdem wird vor jeder Messung durch die Thermografiekamera 3 eine Trübung des im Gehäuse des Abgasturboladers 1 befindlichen optischen Fensters ermittelt, die bei der Ermittlung eines Kennlinienfeldes berücksichtig wird. Die jeweilige Trübung wird in bekannter Weise durch Messung an einem Referenzpunkt ermittelt.

Dadurch, dass mittels der Thermografiekamera 3 die gesamte Schaufelfläche des Abgasturboladers 1 erfasst wird, ist dessen maximale Temperaturbelastung bei den jeweilig eingestellten Betriebsparametern ermittelbar. Durch Variation der Betriebsparameter kann ein Kennfeld erstellt werden, das nahe am Grenzbereich der zulässigen thermischen Belastung der Bauteile des Abgasturboladers 1 durch den Abgasstrom 2 der Verbrennungskraftmaschine 5 liegt. Durch den Einsatz der ermittelten Kennlinienfelder in den jeweiligen Motorsteuergeräten des Fahrzeugtyps, für die eine entsprechende Ermittlung der Kennlinienfelder durchgeführt wurde, kann beim Fahrzeugbetrieb Kraftstoff gespart sowie die Rohemmisionswerte reduziert werden.

### Aufstellung der verwendeten Bezugszeichen

- 1: Abgasturbolader
- 2: Abgasstrom
- 3: Thermografiekamera
- 4: Ladeluft
- 5: Verbrennungskraftmaschine
- 6: Auswertungseinheit
- 7: Motorsteuergerät
- 8: Kalibrierfläche
- 9: Kalibrierung
- 10: Auswertungseinheit
- 11: Datenspeicher
- 12: Getriebesteuerung
- 13: zusätzliche Betriebsparametereingabe

## Patentansprüche

1. Verfahren zur Ermittlung eines Kennlinienfeldes zur Steuerung von aufgeladenen Brennkraftmaschinen, insbesondere zum thermischen Schutz eines Abgasturboladers,
**dadurch gekennzeichnet, dass**
- im dynamischen und statischen Motorbetrieb und bei verschiedenen unterschiedlichen Betriebszuständen mittels einer Thermografiekamera (3) eine Bildersequenz der Messoberfläche der Schaufelräder eines Abgasturboladers (1) aufgenommen wird und in einer Auswertungseinheit (6) für den jeweiligen Betriebszustand ein über die Oberfläche der Schaufelräder betrachteter Temperaturverlauf ermittelt und deren Daten gespeichert werden,
- parallel zur Bildersequenz die für die unterschiedlichen Betriebszustände an einem Motorsteuergerät (7) anliegenden und von ihm ausgegebenen Betriebsparameter der Verbrennungskraftmaschine (5) sowie zusätzliche Betriebsparameter (13), wie Fahrerschutzfunktionen, und der Getriebesteuerung (12) erfasst und deren Daten gespeichert werden,
- durch zeitsynchrone Triggerung des ermittelten Temperaturverlaufs mit den einzelnen Daten der Betriebsparameter in einer Auswertungseinheit (10) eine Zuordnung der für die Temperaturänderung der Schaufelräder des Abgasturboladers (1) maßgeblichen Betriebsparameter erfolgt,
- durch Variieren eines oder mehrerer für die Temperaturänderung der Schaufelräder des Abgasturboladers (1) maßgeblichen Betriebsparameters/Betriebsparameter die maximal zulässige Temperatur der Schaufelräder eingeregelt und die dafür optimalen Betriebsparameter in einem Kennfeld eines Datenspeichers (11) abgelegt werden.

2. Verfahren nach Anspruch 1,
**dadurch gekennzeichnet, dass**
durch Variieren der Zündwinkelkennfelder und/oder der Bauteilschutzanfettungsfunktionen und/oder der Drosselklappenansteuerungsfunktionen und/oder ABS-, ASR-, ESP- oder ähnlicher Fahrschutzfunktionen und/oder Schalteingriffe durch die Geiriebesteuerung von Handschalt-, Automatik- oder Direktschaltgetrieben die Temperaturbelastung der Schaufelräder des Abgasturboladers (1) bei Einhaltung eines vorgegebenen Grenzwertes minimiert wird.

3. Verfahren nach Anspruch 1 und 2,
**dadurch gekennzeichnet, dass**
die Aufnahme der Bildersequenz zur Ermittlung des Kennlinienfeldes am Motorprüfstand erfolgt.

4. Verfahren nach Anspruch 1 bis 3,
**dadurch gekennzeichnet, dass**
vor jeder Aufnahme der Bildersequenz zur Ermittlung des Kennlinienfeldes eine Kalibrierung der aufnehmenden Thermografiekamera (3) erfolgt.

5. Verfahren nach Anspruch 1 bis 4,
**dadurch gekennzeichnet, dass**
vor jeder Messung durch die Thermografiekamera (3) eine Trübung des im Gehäuse des Abgasturboladers (1) befindlichen optischen Fensters durch Messung an einem Referenzpunkt ermittelt und bei der Ermittlung eines Kennlinienfeldes berücksichtig wird.

6. Verfahren nach Anspruch 1 bis 5,
**dadurch gekennzeichnet, dass**
das im Datenspeicher (11) gespeicherte Kennlinienfeld in den Motorsteuergeräten eines für die Ermittlung durchgeführten jeweiligen Fahrzeugtyps zur Regelung des Arbeitsmodus der Verbrennungskraftmaschine eingespeichert wird.

7. Vorrichtung zur zur Durchführung des Verfahrens nach Anspruch 1
**dadurch gekennzeichnet, dass**
in einem Gehäuse auf der turbinenseitigen Seite des durch einen Abgasstrom (2) einer Verbrennungskraftmaschine (5) betriebenen Abgasturboladers (1) ein optisches Fenster derart angeordnet ist, dass sich die Schaufelräder des Abgasturboladers (1) und eine Kalibrierfläche (8) im Sichtbereich einer außerhalb des Abgasturboladers (1) angeordneten Thermografiekamera (3) zur Aufnahme einer Bildersequenz der Messoberfläche der Schaufelräder befinden und die Thermografiekamera (3) datentechnisch mit einer Auswertungseinheit (6), einer Kalibrierung (9), einer weiteren Auswertungseinheit (10), einem Datenspeicher (11) sowie über den Datenspeicher (11) mit einem Motorsteuergerät (7), einer Getriebesteuerung (12) und einer zusätzlichen Betriebsparametereingabe (13) verbunden ist.

## Claims

1. Method for determining a characteristic curve diagram for controlling supercharged internal combustion engines, in particular for providing thermal protection for an exhaust gas turbocharger, **characterized in that**
- a sequence of images of the measuring surface of the turbine blade wheels of an exhaust gas turbocharger (1) is recorded in the dynamic and static engine operating modes and in various different operating states by means of a thermographic camera (3), and a temperature profile which is considered over the surface of the turbine blade wheels is determined for the respective operating state in an evaluation unit (6) and the data of said profile is stored,
- in parallel with the sequence of images, the operating parameters of the internal combustion engine (5) which are present for the different operating states at an engine control device (7) and are output by said engine control device (7) as well as additional operating parameters (13), such as driver protection functions, and of the gearbox controller (12) are sensed and their data is stored,
- an assignment of the operating parameters which are decisive for the change in temperature of the turbine blade wheels of the exhaust gas turbocharger (1) is made to the individual data items of the operating parameters in an evaluation unit (10) by synchronous triggering of the temperature profile which is determined,
- the maximum permissible temperature of the turbine blade wheels is applied by varying one or more of the operating parameters which is/are decisive in the change in the temperature of the turbine blade wheels of the exhaust gas turbocharger (1), and the operating parameters which are optimum for this are stored in a characteristic diagram of a data memory (11).

2. Method according to Claim 1, **characterized in that** the temperature loading on the turbine blade wheels of the exhaust gas turbocharger (1) is minimized, while complying with a predefined limiting value, by varying the ignition angle characteristic diagrams and/or the component protection enrichment functions and/or the throttle valve actuation functions and/or antilock brake system functions, traction control system functions, electronic stability program functions or similar driving protection functions and/or gear changing interventions by the gearbox controller of manual shift gearboxes, automatic transmissions or direct shift gearboxes.

3. Method according to Claims 1 and 2, **characterized in that** the recording of the sequence of images for determining the characteristic curve diagram is carried out on an engine test bench.

4. Method according to Claims 1 to 3, **characterized in that** the recording thermographic camera (3) is standardized before each recording of the sequence of images for determining the characteristic curve diagram.

5. Method according to Claims 1 to 4, **characterized in that** before each measurement by the thermographic camera (3) a blurred portion of the optical window located in the housing of the exhaust gas turbocharger (1) is determined by measurement at a reference point and is taken into account in the determination of a characteristic curve diagram.

6. Method according to Claims 1 to 5, **characterized in that** the characteristic curve diagram which is stored in the data memory (11) is stored in the engine control devices of a respective type of vehicle implemented for the determination, in order to regulate the operating mode of the internal combustion engine.

7. Device for carrying out the method according to Claim 1, **characterized in that** an optical window is arranged in a housing on the turbine-end side of the exhaust gas turbocharger (1) which is operated by an exhaust gas stream (2) of an internal combustion engine (5) in such a way that the turbine blade wheels of the exhaust gas turbocharger (1) and a standardization surface (8) are located in the viewing range of a thermographic camera (3) which is arranged outside the exhaust gas turbocharger (1) and has the purpose of recording a sequence of images of the measuring surface of the turbine blade wheels and the thermographic camera (3) is connected by data processing equipment to an evaluation unit (6), a standardization means (9), a further evaluation unit (10), a data memory (11) and via the data memory (11) to an engine control device (7), a gearbox controller (12) and an additional operating parameter input means (13).

## Revendications

1. Procédé de détermination d'un ensemble de caractéristiques pour commander des moteurs à combustion interne suralimentés, notamment pour la protection thermique d'un turbocompresseur de gaz d'échappement,
**caractérisé en ce que**
- une séquence d'images de la surface mesurée des roues à pales d'un turbocompresseur de gaz d'échappement (1) est enregistrée au moyen d'une caméra thermographique (3) pendant le fonctionnement dynamique et statique du moteur et dans différentes situations de fonctionnement variées puis une courbe de température observée sur la surface des roues à pales est déterminée dans une unité d'interprétation (6) pour la situation de fonctionnement correspondante et ses données sont enregistrées,
- parallèlement à la séquence d'images, les paramètres de fonctionnement du moteur à combustion interne (5) appliqués à une commande de moteur (7) pour les différentes situations de fonctionnement et délivrés par celle-ci ainsi que des paramètres de fonctionnement supplémentaires (13) tels que les fonctions de protection du conducteur et la commande de la transmission (12) sont acquis et leurs données sont enregistrées,
- une affectation des paramètres de fonctionnement déterminants pour le changement de température des roues à pales du turbocompresseur de gaz d'échappement (1) est réalisée dans un dispositif d'interprétation (10) par un déclenchement synchronisé dans le temps de courbe de température déterminée avec les données individuelles des paramètres de fonctionnement,
- la température maximale admissible des roues à pales est régulée en faisant varier un ou plusieurs paramètres de fonctionnement déterminants pour le changement de température des roues à pales du turbocompresseur de gaz d'échappement (1) et les paramètres de fonctionnement optimaux à cet effet sont consignés dans un ensemble de caractéristiques d'une mémoire de données (11).

2. Procédé selon la revendication 1,
**caractérisé en ce que**
la contrainte thermique des roues à pales du turbocompresseur de gaz d'échappement (1) est réduite au minimum tout en respectant une valeur limite prédéfinie en faisant varier la caractéristique d'angle de came et/ou les fonctions de graissage de protection des composants et/ou les fonctions de commande des clapets d'étranglement et/ou les fonctions de protection du conducteur ABS, ASR, ESP ou similaires et/ou les interventions de changement de rapport par la commande de transmission des boîtes de vitesse à changement manuel, automatique ou direct.

3. Procédé selon la revendication 1 et 2,
**caractérisé en ce que**
l'enregistrement de la séquence d'images destinée à déterminer l'ensemble de caractéristiques s'effectue sur un banc d'essai du moteur.

4. Procédé selon la revendication 1 à 3,
**caractérisé en ce que**
un calibrage de la caméra thermographique (3) enregistreuse est réalisé avant chaque enregistrement de la séquence d'images destinée à déterminer l'ensemble de caractéristiques.

5. Procédé selon la revendication 1 à 4,
**caractérisé en ce que**
un obscurcissement de la fenêtre optique qui se trouve dans le boîtier du turbocompresseur de gaz d'échappement (1) est déterminé avant chaque mesure par la caméra thermographique (3) par une mesure au niveau d'un point de référence et sera pris en compte lors de la détermination d'un ensemble de caractéristiques.

6. Procédé selon la revendication 1 à 5,
**caractérisé en ce que**
l'ensemble de caractéristiques enregistré dans la mémoire de données (11) est enregistré dans les commandes de moteur d'un type de véhicule à chaque fois utilisé pour la détermination en vue de la régulation du mode de fonctionnement du moteur à combustion interne.

7. Dispositif pour mettre en oeuvre le procédé selon la revendication 1,
**caractérisé en ce que**
une fenêtre optique est disposée dans un boîtier sur le côté turbine du turbocompresseur de gaz d'échappement (1) entraîné par un courant de gaz d'échappement (2) d'un moteur à combustion interne de telle sorte que les roues à pales du turbocompresseur de gaz d'échappement (1) ainsi qu'une surface de calibrage (8) se trouvent dans le champ de vision d'une caméra thermographique (3) disposée à l'extérieur du turbocompresseur de gaz d'échappement (1) pour l'enregistrement d'une séquence d'images de la surface mesurée des roues à pales et la caméra thermographique (3) est reliée par technique informatique avec une unité d'interprétation (6), un dispositif de calibrage (9), une autre unité d'interprétation (10), une mémoire de données (11) ainsi que par le biais de la mémoire de données (11) avec une commande de moteur (7), une commande de transmission (12) et un dispositif de saisie de paramètres (13) supplémentaire.
